# EUROPEAN PATENT APPLICATION

(11) **EP 1 676 689 A1**
(43) Date of publication of application: **05.07.2006**
(21) Application number: 05380003.3
(22) Date of filing: 04.01.2005
(51) Int. Cl.: B29C 45/72, B29C 45/40, B29C 35/16, B29C 49/64

(54) **A preform injection moulding apparatus**

(71) Applicant: Industrial de Moldes Y Matrices SA, 08110 Montcada I Reixac (Barcelona) (ES)
(72) Inventor: Atance Orden, Angel Industrial de Moldes, 08810 Montcada I Reixac (Barcelona) (ES)
(74) Representative: Torner Lasalle, Elisabet

(57) **Abstract**

This apparatus comprises an injection hot channel (1); a cavity block (2) containing at least one injection cavity (10) being in connection with said hot channel (1); neck injection moulding female die halves (9a, 9b) being fitted onto a neck injection moulding female die carrier plate (3); at least one male die (7) being associated to a base plate (6) being actuated to be shifted in a first direction (D1) between a closed position wherein said male die (7) has been inserted into said injection cavity (10) and an open position wherein the male die (7) has been withdrawn from said injection cavity (10). A stripper member (8) is associated to the male die (7) and is configured to define one portion of the preform mould, said stripper member being connected to a stripper plate (4) being actuated to shift the stripper member (8) in a reciprocating motion in said first direction (D1) in order to strip the preform (P) from the male die (7).

## Description

### Technical field

The present invention concerns a preform injection moulding apparatus comprising a preform stripper member having a surface being coinvolved in the formation of the preform mould cavity. The apparatus is adapted to carry out preform injection-cooling-stripping cycles, and in its corresponding arrangement is apt to be used both for carrying out cycles wherein the injection and the cooling operations are carried out in the very injection cavity and for carrying out cycles. wherein the injection and the cooling operations are separately carried out in an injection cavity and in a cooling cavity, respectively.

### Technical background

Preform injection moulding apparatuses are well known, said preforms being hollow, test-tube-shaped bodies being made of a plastics material such as for example poly(ethylene terephtalate) (PET) and provided with a neck optionally having and external thread and an annular flange, and with a lip. The preforms are to be used in the ulterior manufacture of plastic bottles through a blow moulding operation being performed on the test-tube-shaped body, the neck and lip being unaltered in said process. A simple type apparatus basically comprises a fixed portion with an injection hot channel, with a cavity block containing at least one injection cavity being in connection with said hot channel, said injection cavity defining a first portion of a mould being apt to be used for moulding said preform. A neck injection moulding female die carrier plate is associated to the cavity block and has fitted onto it neck injection moulding female die halves being adapted to be brought together against the open end of said injection cavity thus defining a second portion of said preform mould, and to be spread apart. In a movable portion the apparatus comprises a base plate having associated to it at least one male die being configured to define a third portion of the preform mould. This base plate is actuated to be shifted in a first direction between a closed position wherein said male die has been inserted into said injection cavity and an open position wherein the male die has been withdrawn from said injection cavity. During the passage from the closed position to the open position said neck injection moulding female die halves cooperate in the withdrawal of the preform. In these simple apparatuses the preform injecting and cooling operations are carried out in the very injection cavity.

In order to reduce the duration of the preform injecting-cooling-stripping cycle apparatuses are being used at present wherein the injecting and cooling operations are separately carried out in an injection cavity and in a cooling cavity, respectively. This type of apparatus uses a mould having several cavities and being fixed to a vertical or horizontal injection press and an external device for the cooling of the injected preforms. Such a preform cooling device is necessary when wishing to reduce the production cycle time, since the preforms need a long cooling time due to their thick walls, and a cooling operation being carried out in its entirety in the injection mould would bring about an excessively long cycle. A portion of the total cooling time is thus spent in the mould, and another (generally longer) portion is spent externally in a device being specially designed for such a purpose.

These cooling devices have been carried out in practice as per many and very varied designs being meant for a horizontal or a vertical actuation as best befits in each case their cooperation with the injection press. Patent IT-A-1317242 to Cantoni discloses a preform manufacturing process using an injection mould with several injection cavities and two cooling plates being each provided with a number of cooling cavities being equal to the number of injection cavities being provided in the mould. The cooling plates are situated each at one of both sides of the injection mould, and two male die sets are fitted onto a movable carrier being alternatingly shifted between two positions. In a first position one of the male die sets is in relation with the injection cavities while the other male die set is in relation with the cooling cavities of a first plate, whereas in a second position the male die set that was in relation with the injection cavities has now been placed in relation with the cooling cavities of the second plate, and the male die set that was in relation with the cooling cavities of the first plate has now been placed in relation with the injection cavities.

Patents EP-A-0673748, US-A-4201535 and US-A-4472131 disclose different models of preform injection moulding apparatuses alternatingly carrying out injection and cooling operations in separate cavities. In the precited patent US-A-4472131 the moulds for the preform neck portions are made up of two halves being apt to be spread apart through mechanical means so as to thus allow the preform to be stripped. A rod is arranged in an axial arrangement inside the male die, said rod being shifted by a cam device so as to thus open a line valve being provided in a pressurised air duct. The rod end when being shifted projects from the male die end so as to thus initially push the preform, and a pressurised air flow flowing out through the male die end causes the preform to be fully stripped off. This stripping device is a complex and costly one.

Another preform stripping device of a known type comprises a double set of neck female die halves, one of both sets being meant for the injection and the other one being meant for the stripping operation. This is nevertheless an uneconomical device since the neck female die halves are highly complex elements fetching a high cost as regards their construction.

It is an object of the present invention to serve as a contribution towards mitigating the above-mentioned drawbacks by means of a preform injection moulding apparatus being provided with a preform stripping system being both simple and efficient and constructed by means of easily machinable parts fetching a low cost as regards their construction.

### Disclosure of the invention

The present invention serves as a contribution towards realising the objects having been mentioned above as well as other objects by providing a preform injection moulding apparatus of the type as per a basic exemplary embodiment comprising an injection hot channel; a cavity block containing at least one injection cavity being in connection with said hot channel, said injection cavity defining a first portion of a mould being apt to be used for moulding said preform; a neck injection moulding female die carrier plate having fitted onto it neck injection moulding female die halves being adapted to be brought together against the open end of said injection cavity thus defining a second portion of said preform mould, and to be spread apart; a base plate having associated to it at least one male die being configured to define a third portion of the preform mould, said base plate being actuated to be shifted in a first direction between a closed position wherein said male die has been inserted into said injection cavity and an open position wherein the male die has been withdrawn from said injection cavity. The apparatus of the present invention is characterised in that it does besides comprise a stripper member being associated to said male die and configured to define a fourth portion of the preform mould, said stripper member being connected to a stripper plate being actuated to shift the stripper member in said first direction in order to thus strip the preform from the male die.

The present invention provides other exemplary embodiments being of a more complex construction wherein the injection and cooling operations are respectively carried out in separate injection and cooling cavities, with a double set of male dies being apt to be alternatingly shifted. A common feature of all exemplary embodiments of the present invention lies in the fact that the mould cavity, and hence the geometry of the preform, is defined by four basic members of the apparatus, i.e.: the injection cavity forming the outer side of the preform body; the neck injection moulding female die halves forming the outer side of the preform neck; the male die forming the inner side of the preform; and the stripper member forming the upper front side of the preform lip. It is to be pointed out that all preform moulds of the prior art form the mould cavity by means of only three members of the apparatus, i.e.: the injection cavity; the neck female die halves; and the male die.

The novel feature singling out the apparatus of the present invention hence lies in the stripping system including the aforementioned stripper member, this latter serving two purposes. The first one is to facilitate the stripping and falling off of the preform, this above all in the case of those preforms being difficult to strip with the prior art devices because of having some complicated profile in the neck area. The second one is to provide a significant reduction of the manufacturing costs, this being achieved thanks to the fact that the sleeve-shaped stripper members of the present invention are easily machinable parts fetching a low cost as regards their construction, their incorporation obviating the need to arrange a double set of neck female die halves as in some of the systems being used at present, consequent savings being thus obtained since the neck female die halves are one of the most complex members fetching a high cost as regards their construction from among those making up a preform injection moulding apparatus of this type.

### Brief description of the drawings

The aforementioned and other advantages and features will be more fully understood when reading the following detailed description of some exemplary embodiments in connection with the appended drawings wherein:
Fig. 1 is a cross-sectional view diagrammatically showing a preform injection moulding apparatus as per a first exemplary embodiment of the present invention with the base plate in a closed position;
Fig. 2 is a cross-sectional view diagrammatically showing the apparatus of Fig. 1 with the base plate in an open position;
Fig. 3 is a cross-sectional view diagrammatically showing the apparatus of Fig. 1 with the base plate in an open position and the stripper member in the process of carrying out a preform stripping operation;
Fig. 4 is a cross-sectional view diagrammatically showing a preform injection moulding apparatus as per a second exemplary embodiment of the present invention with the base plate in a closed position;
Figs. 5 through 10 are cross-sectional views diagrammatically showing the apparatus of Fig. 4 in different stages of a preform moulding, cooling and stripping cycle;
Figs. 11 and 12 are diagrammed plan-views showing components being associated to a fixed portion and to a movable portion, respectively, of the apparatus as per an alternative arrangement of the second exemplary embodiment being shown in Figs. 4 through 10; and
Figs. 13 and 14 are diagrammed plan-views showing components being associated to a fixed portion and to a movable portion, respectively, of a preform injection moulding apparatus as per a third exemplary embodiment of the present invention.

### Detailed description of some exemplary embodiments

All throughout the following description the same numerals have been used to designate like members in the different exemplary embodiments.

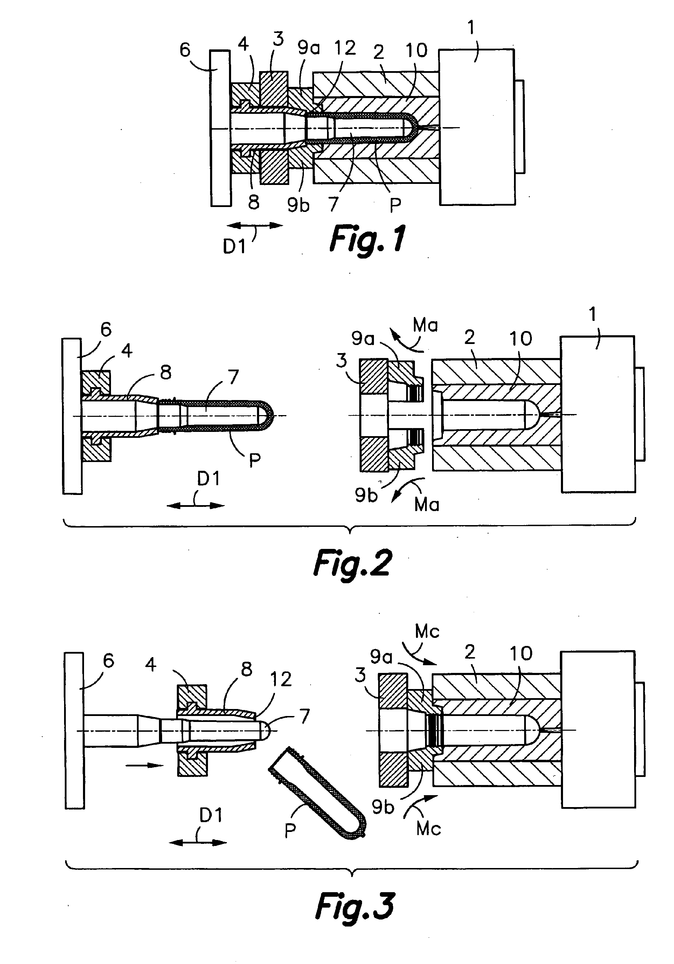

Firstly referring to Figs. 1 through 3 a first exemplary embodiment of the apparatus of the invention will be described which is representative of its simplest expression and is adapted to produce preforms P as per the illustrated example comprising a test-tube-shaped body with a neck and a lip.

The apparatus of this first exemplary embodiment comprises an injection hot channel 1 having attached to it a cavity block 2 containing one injection cavity 10 being in connection with said hot channel 1. The aforementioned injection cavity 10 defines a first portion of a mould being apt to be used for moulding the preform P, said first portion corresponding to an outer surface of said test-tube-shaped body. The precited hot channel 1 and the cavity block 2 make up a fixed portion 20 being attached to a fixed plate of an injection machine (not shown). This fixed portion 20 of the apparatus has associated to it a neck injection moulding female die carrier plate 3 having fitted onto it neck injection moulding female die halves 9a, 9b. The precited neck injection moulding female die carrier plate 3 is apt to carry out a small motion in order to thus go up to or move away from the cavity block 2, and said neck injection moulding female die halves 9a, 9b are apt to carry out motions in order to thus go up to one another or move away from one another. With these combined motions the neck injection moulding female die halves 9a, 9b are adapted to adopt a closed position against the open end of said injection cavity 10 (Fig. 1) thus during the injection moulding operation defining a second portion of said mould being apt to be used for moulding the preform P, and to thereupon be spread apart (Fig. 2) thereby effecting a combined opening motion being symbolised by arrows Ma in order to thus allow the withdrawal of the moulded preform P. The aforementioned second portion of the mould being apt to be used for moulding the preform P is defined by said neck injection moulding female die halves 9a, 9b, corresponds to an outer surface of said neck and usually includes a configuration being apt to form a thread and/or an annular protrusion on said outer surface of the neck of the preform P.

The apparatus does besides comprise a movable portion 30 being fixed to a movable plate of said injection machine. This movable portion 30 is formed by a base plate 6 having attached to it a male die 7 being configured to define a third portion of the mould being apt to be used for moulding the preform P, said third portion corresponding to an inner surface both of the test-tube-shaped body and of the preform neck. The aforementioned base plate 6 is mounted in a guidedly movable arrangement and is actuated in order to be shifted in a first direction D1 between a closed position being shown in Fig. 1 wherein said male die 7 has been inserted into the injection cavity 10, and an open position being shown in Fig. 2 wherein the male die 7 has been withdrawn from said injection cavity 10. In this first exemplary embodiment the apparatus is adapted to carry out an operation wherein a molten plastics material (such as for example a poly(ethylene terephtalate) (PET)) is injected in order to thus mould the preform P inside the mould being defined when the base plate 6 is in the closed position, and a subsequent operation wherein the preform P is cooled in the same injection cavity 10 before the base plate 6 goes over to its open position. The cavity block is for such a purpose generally provided with a circuit for a cooling fluid (not shown). The preform P contracts slightly when cooling down, in such a way that the preform P remains securely attached to the male die 7 when the base plate 6 goes over to the open position (Fig. 2).

The movable portion 30 of the apparatus does besides comprise a stripper member 8 being associated to said male die 7, said stripper member being the one characterisingly distinguishing the apparatus as per the instant invention. The aforementioned stripper member 8 has the shape of a sleeve being arranged around the male die 7 and comprising an annular end surface 12, this latter when the base plate 6 is in the closed position (Fig. 1) defining a fourth portion of the mould being apt to be used for moulding the preform P, said fourth portion substantially corresponding to an annular end portion around said lip of the preform P. The stripper member 8 is connected to a stripper plate 4 being guidedly actuated to shift the stripper member 8 along the male die 7 in a reciprocating motion being carried out while the base plate 6 is in said open position (Fig. 3) in order to thus strip the preform P from the male die 7. While the stripping operation is being carried out the neck injection moulding female die halves 9a, 9b are again brought together thereby carrying out a combined closing motion being symbolised by arrows Mc in Fig. 3, and when the stripper member 8 has regained its initial position the base plate 6 is ready to be again brought to the closed position wherein the male die 7 will be again inserted inside the injection cavity 10 (Fig. 1), so that a new injection-cooling-stripping cycle can be again started for a preform P.

According to an alternative embodiment (not shown) of this first exemplary embodiment the cavity block 2 includes any operative number of injection cavities 10 and the base plate 6 carries an equal number of male dies 7, the operation cycle being jointly carried out for all of them in a like manner as per the above description referring to Figs. 1 through 3 for one only injection cavity 10 and one only male die 7. In this alternative arrangement each male die 7 has its own stripper member 8 associated to it and all stripper members 8 are attached to one only stripper plate 4 being common to all of them.

It is to be pointed out that in contrast to the apparatuses of the prior art wherein the mould cavity is defined by only three basic members a relevant feature of the instant invention being present in common in all exemplary embodiments lies in that the mould cavity, and hence the geometry of the preform P, is defined by four basic members. As has been described above, these four basic members are: the injection cavity 10 forming the outer side of the body of the preform P; the male die 7 forming the inner side of the preform P; the neck injection moulding female die halves 9a, 9b forming the outer side of the neck of the preform P; and the stripper member 8 forming the upper front portion of the lip of the preform P. The novelty lies in the stripper member 8, this latter being used after the injection for stripping the preform P from the male die 7.

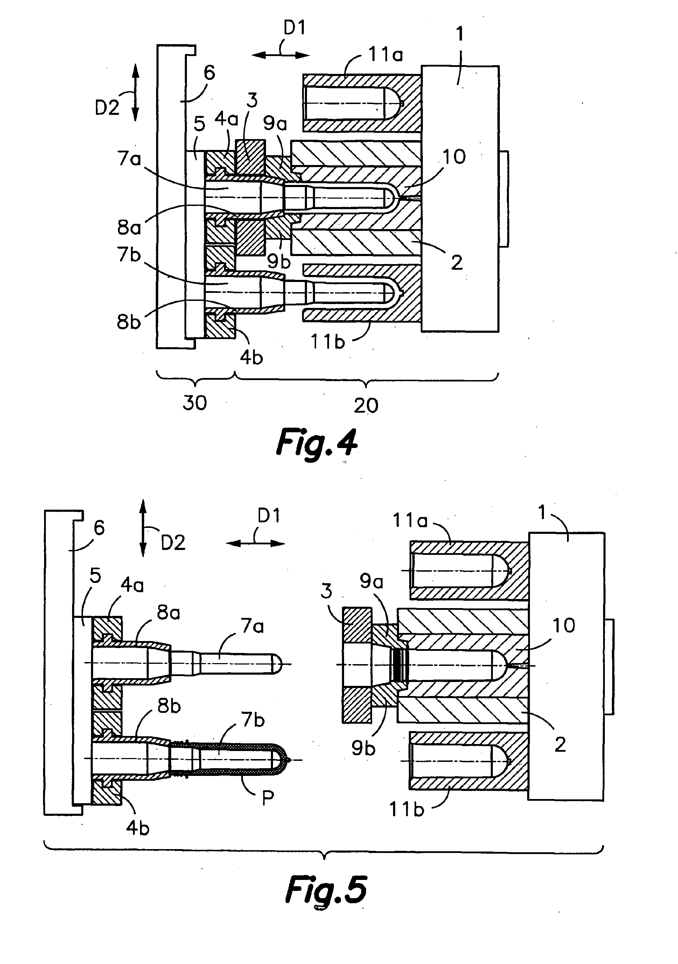

With reference now to Figs. 4 through 10 a second exemplary embodiment of the apparatus of the invention will be now described in which in order to reduce the duration of the injection-cooling-stripping cycle for the preform P the cooling operation is completed in a cooling cavity 11 a, 11 b other then the injection cavity 10. Like in the previous exemplary embodiment the preforms P being produced comprise a test-tube-shaped body with a neck and a lip.

According to this second exemplary embodiment and in a like manner as per the above description regarding the first exemplary embodiment the apparatus comprises a fixed portion 20 being attached to a fixed plate of an injection machine (not shown), and a movable portion 30 being fixed to a movable plate of said machine (Fig. 4). The fixed portion 20 consists of an injection hot channel 1 having attached to it a cavity block 2 containing at least one injection cavity 10 defining a first portion of a mould cavity in which a preform P will be formed during an injection moulding operation. The cavity block 2 has associated to it a neck injection moulding female die carrier plate 3 supporting two neck injection moulding female die halves 9a and 9b being adapted to be brought together against the open end of the injection cavity 10 in order to thus form a second portion of the preform, and to be spread apart.

In this second exemplary embodiment the injection cavity 10 is nevertheless interposed between two cooling cavities 11a and 11 b being adapted to cool the outside of the preform P by means of a circuit for a cooling fluid (not shown) in a cooling operation being carried out after the injection moulding operation. The movable portion 30 comprises a base plate 6 being guidedly actuated to be shifted in a first direction D1 between a closed position being shown in Figs. 4, 6 and 10, and an open position being shown in Figs. 5, 7, 8 and 9. A male die plate 5 is fitted onto the base plate 6 and has securely attached to it two male dies 7a, 7b. The aforementioned male die plate 5 is adapted and actuated to be shifted on the base plate 6 in a second direction D2 being transversally oriented with respect to the first direction D1. During the operation of the apparatus a control device in a combined way controls the motion of the base plate 6 in the first direction D1 and that of the male die plate 5 in the second direction D2 so as to thus alternatingly insert the male dies 7a, 7b into the injection cavity 10 and into one of the two cooling cavities 11 a, 11 b as will be described in greater detail below. Each male die 7a, 7b has associated to it a respective stripper member 8 having been described above in relation to the first exemplary embodiment, and each stripper member 8a, 8b is connected to a respective stripper plate 4a, 4b being separately actuated in order to thus bring about a reciprocating motion of the stripper member 8a, 8b along its respective male die 7a, 7b while the base plate 6 is in said open position in order to thus strip the preform P.

Note that in this second exemplary embodiment like in the first one the mould cavity is formed by four basic members being in this case the following ones: the injection cavity 10; the neck injection moulding female die halves 9a and 9b; and, alternately, one and the other male die 7a, 7b and the stripper member 8a, 8b being associated to it.

The operation of the apparatus as per the second exemplary embodiment is as follows: The cycle is initiated, for example, with the apparatus in the position being shown in Fig. 5, where the base plate 6 is in the open position and the male die plate 5 is in one of its two possible positions which will be termed herein the "lowered position" in relation to the views being shown in the figures. In this position a first male die 7a of the two male dies 7a, 7b is bare and facing the injection cavity 10 against which the two neck injection moulding female die halves 9a, 9b have been brought together, whereas the second male die 7b is facing one of the cooling cavities which will be termed herein the "lower cooling cavity 11 b" in relation to the views being shown in the figures. On this second male die 7b a preform P is arranged which is not yet sufficiently cooled and was originated in a previous injection moulding operation.

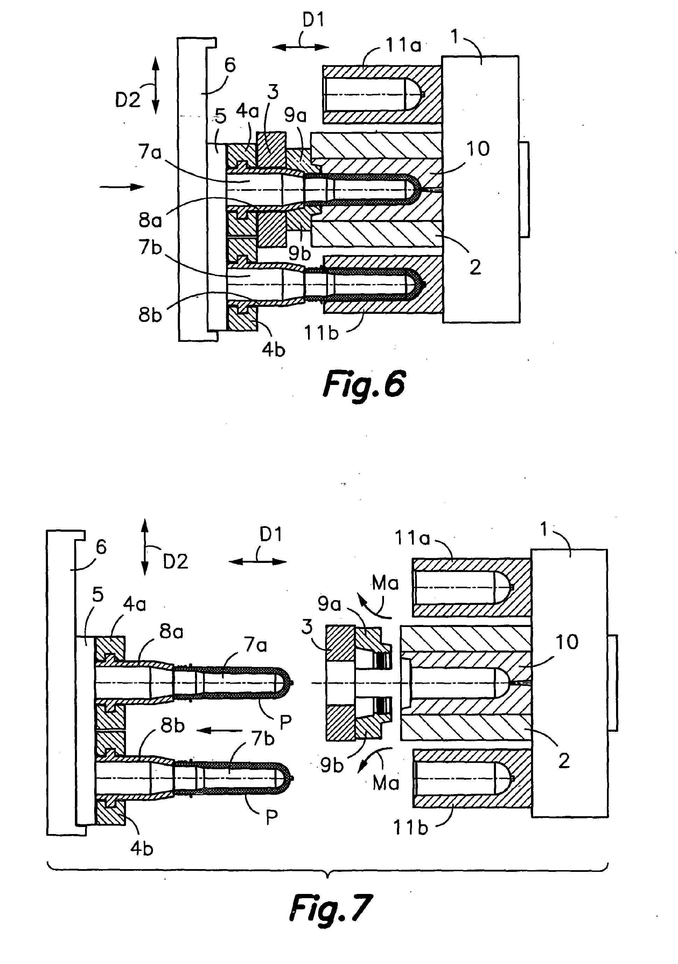

Without changing the position of the male die plate 5 the base plate 6 is next shifted to its closed position being shown in Fig. 6, where the first male die 7a is inserted inside the injection cavity 10 in such a way that the cavity of the mould being apt to be used for moulding the preform P is completed through the joint cooperation of the relevant surfaces of the injection cavity 10, of the neck injection moulding female die halves 9a, 9b, of the first male die 7a, and of a first stripper member 8a of the two stripper members 8a, 8b, said first stripper member being associated to the first male die 7a. Once having reached this position a molten plastics material being fed from the injection hot channel 1 is injected into the mould cavity so as to thus form a first preform P. The second male die 7b with the corresponding preform P arranged on it has at the same time been inserted into said lower cooling cavity 11 b where the cooling of the preform P is completed up to a desired degree.

The base plate 6 thereupon and as shown in Fig. 7 starts a shifting motion towards its open position while the neck injection moulding female die carrier plate 3 and the neck injection moulding female die halves 9a, 9b synchronously and at the same time carry out a combined opening motion being symbolised by arrows Ma. At the start of this motion the withdrawal of the preform P by dragging it along with the first male die 7a is carried out with the assistance of the neck injection moulding female die halves 9a, 9b until these latter have been totally spread apart to thus allow the first male die 7a to be completely withdrawn and the preform P to be stripped from the injection cavity 10. The second male die 7b is in its turn and at the same time simply withdrawn from the lower cooling cavity 11 b with the sufficiently cooled preform P on it.

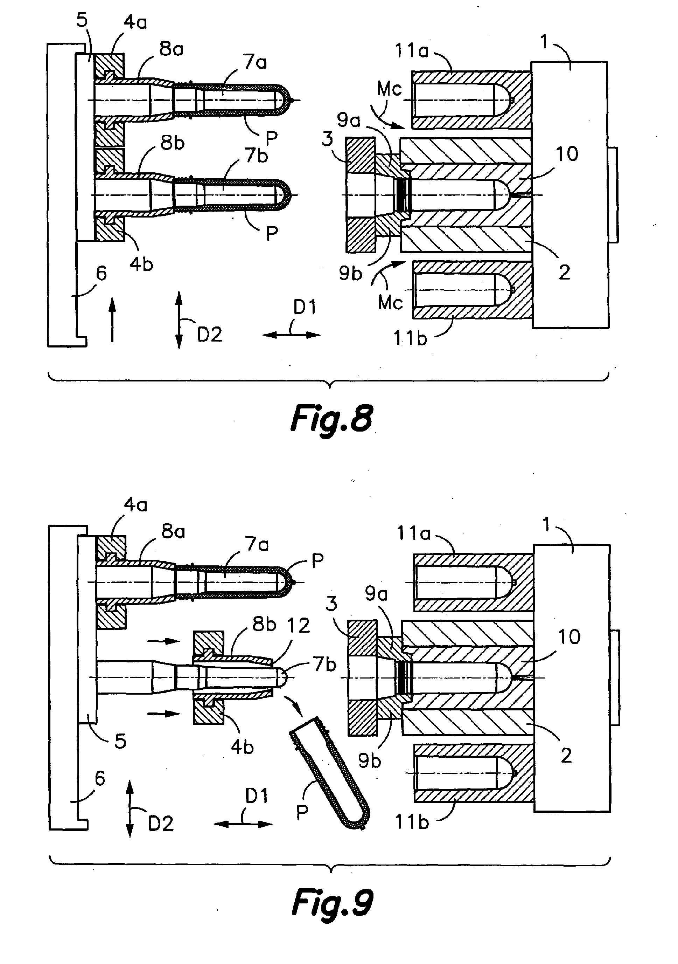

As shown in Fig. 8, once the base plate 6 is in the open position the neck injection moulding female die carrier plate 3 and the neck injection moulding female die halves 9a, 9b carry out a combined closing motion being symbolised by arrows Mc, the neck injection moulding female die halves 9a, 9b thus regaining their initial closed position. By means of a motor-driven, hydraulic mechanism the male die plate 5 is thereupon or at the same time shifted on the base plate 6 up to the position being shown in Fig. 8, wherein the first male die 7a carrying the just injection moulded, hot preform P is facing the upper cooling cavity 11 a while the second male die 7b carrying the cooled-down preform P is facing the injection cavity 10.

As shown in Fig. 9, the second stripper member 8b is thereupon shifted by its respective stripper plate 4b in a reciprocating motion along the second male die 7b so as to thus strip the cooled-down preform P, so that the second male die 7b is now bare and facing the injection cavity 10.

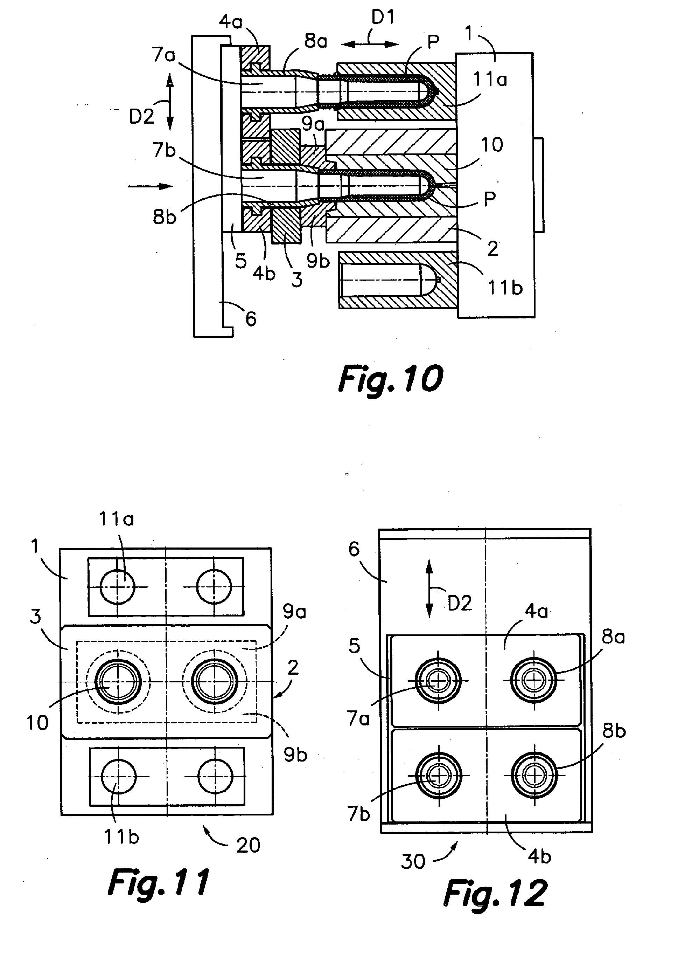

The base plate 6 is finally shifted again to the closed position as shown in Fig. 10, so that the first male die 7a carrying the just injected, hot preform P is thus inserted into the upper cooling cavity 11a and the second male die 7b, being now bare, is inserted into the injection chamber 10, in such a way that the cavity of the mould being apt to be used for moulding the preform P is completed through the joint cooperation of the relevant surfaces of the injection cavity 10, of the neck injection moulding female die halves 9a, 9b, of the second male die 7b, and of the second stripper member 8b. The hot preform P is thus cooled in the upper cooling cavity 11 a while a new preform P is injection moulded on the second male die 7b in the injection cavity 10.

The steps having been described above are thereupon repeated in an alternating manner. It is to be pointed out that the control device controls the motions of the stripper plates 4a, 4b so as to have the preform P stripped only from that male die 7a, 7b having been withdrawn from a cooling cavity 11 a, 11 b but in such a way that they remain inactive on the male die 7a, 7b passing from the injection cavity 10 to one of the cooling cavities 11a, 11b.

Figs. 11 and 12 are diagrammed plan-views respectively showing the fixed portion 20 and the movable portion 30 of an apparatus as per an alternative arrangement of this second exemplary embodiment. Referring to Fig. 11, the cavity block 2 includes a number of injection cavities 10 being arranged in a row between two rows having each an equal number of cooling cavities 11 a, 11 b. It goes without saying that although the rows being shown in the exemplary embodiment having been depicted in Fig. 11 are of two elements said rows could be of any operative number of elements. Fig. 12 shows the base plate 6 having the male die plate 5 fitted onto it, said male die plate carrying a number of male dies 7a, 7b being twice the number of injection cavities 10. The male dies 7a, 7b are divided into two rows being arranged at a distance being equal to the distance between the injection cavities 10 and the cooling cavities 11a, 11b. The working cycle is jointly carried out for all elements in a like manner as that having been described above in relation to Figs. 4 through 10 for one only injection cavity 10 being arranged between two cooling cavities 11 a, 11 b and for two male dies 7a, 7b, save for the fact that in this alternative arrangement each male die 7a, 7b has its own stripper member 8a, 8b associated to it and all of the stripper members 8a being associated to the male dies 7a of one of the rows are attached to a first stripper plate 4a being common to all of them and all of the stripper members 8b being associated to the male dies 7b of the other one of the rows are attached to a second stripper plate 4b being common to all of them. The first and second stripper plates 4a, 4b are actuated and controlled in a separate manner.

According to another alternative arrangement of the second exemplary embodiment (not shown) the fixed portion of the apparatus comprises a number of rows of injection cavities being alternately arranged between rows of cooling cavities, the two end rows being rows of cooling cavities. The movable portion comprises a number of rows of male dies being twice the number of rows of injection cavities. All of the stripper members being associated to the male dies of each of the rows are attached to a stripper plate being common to all of them, said stripper plate being actuated and controlled in a separate manner.

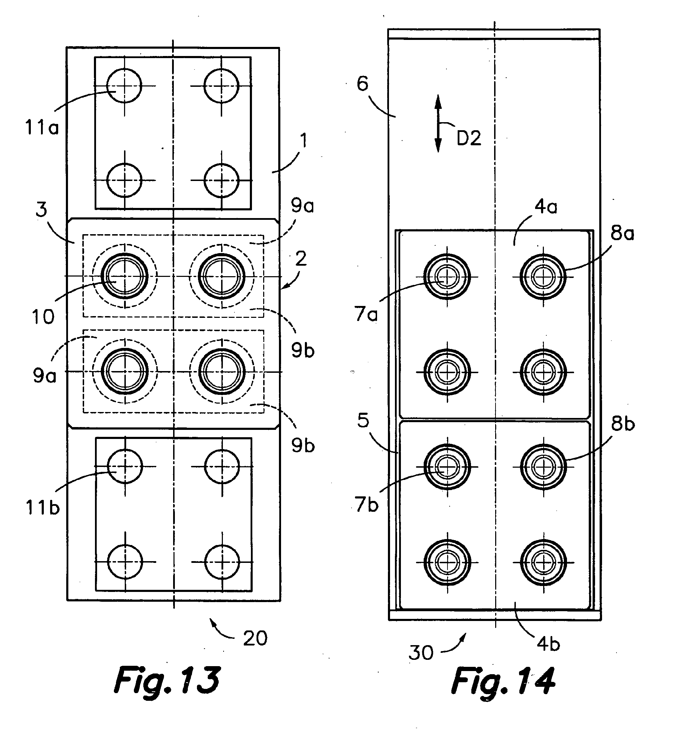

Figs. 13 and 14 are diagrammed plan-views respectively showing the fixed portion 20 and the movable portion 30 of an apparatus as per a third exemplary embodiment. The cavity block 2 being shown in Fig. 13 includes an array of injection cavities 10 being arranged as per a matrix of a number of rows by a number of columns, for example. This array of injection cavities 10 is arranged between two arrays of cooling cavities 11 a, 11 b, said two arrays being each formed by a number of rows and a number of columns being equal to the number of rows and the number of columns of the array of injection cavities 10. It goes without saying that although the matrices being shown in the exemplary embodiment having been depicted in Fig. 13 are of two rows by two columns of elements said matrices could be of any operative number of rows and columns. Fig. 14 shows the base plate 6 having the male die plate 5 fitted onto it, said male die plate carrying a number of male dies 7a, 7b being twice the number of injection cavities 10. The male dies 7a, 7b are divided into two arrays, each array having a number of rows and a number of columns being equal to the number of rows and the number of columns of the array of injection cavities 10, both arrays being separated by a distance being equal to the distance between the arrays of injection cavities 10 and the arrays of cooling cavities 11 a, 11 b. The working cycle is jointly carried out for all elements in a like manner as that having been described above in relation to Figs. 4 through 10 for one only injection cavity 10 being arranged between two cooling cavities 11 a, 11 b and for two male dies 7a, 7b, save for the fact that in this exemplary embodiment each male die 7a, 7b has its own stripper member 8a, 8b associated to it and all of the stripper members 8a being associated to the male dies 7a of one of the arrays are attached to a first stripper plate 4a being common to all of them and all of the stripper members 8b being associated to the male dies 7b of the other one of the arrays are attached to a second stripper plate 4b being common to all of them. The first and second stripper plates 4a, 4b are actuated and controlled in a separate manner.

According to an alternative arrangement of this third exemplary embodiment (not shown) the fixed portion of the apparatus comprises a number of arrays of injection cavities, said arrays being arranged in an alternate arrangement between arrays of cooling cavities, the end arrays being arrays of cooling cavities. The movable portion comprises a number of male die arrays being twice the number of arrays of injection cavities. All of the stripper members being associated to the male dies of each of the male die arrays are attached to a stripper plate being common to all of them, said stripper plate being actuated and controlled in a separate manner.

An ordinary skilled person will be in a position to introduce changes and modifications of the exemplary embodiments having been shown and described above without departing from the scope of the present invention as defined in the appended claims.

## Claims

1. A preform injection moulding apparatus of the type comprising:
- an injection hot channel (1);
- a cavity block (2) containing at least one injection cavity (10) being in connection with said hot channel (1), said injection cavity (10) defining a first portion of a mould being apt to be used for moulding said preform (P);
- a neck injection moulding female die carrier plate (3) having fitted onto it neck injection moulding female die halves (9a, 9b) being adapted to be brought together against the open end of said injection cavity (10) thus defining a second portion of said mould being apt to be used for moulding the preform (P), and to be spread apart;
- a base plate (6) having associated to it at least one male die (7) being configured to define a third portion of the mould being apt to be used for moulding the preform (P), said base plate (6) being actuated to be shifted in a first direction (D1) between a closed position wherein said male die (7) has been inserted into said injection cavity (10) and an open position wherein the male die (7) has been withdrawn from said injection cavity (10);
said preform injection moulding apparatus being **characterised in that** it does besides comprise a stripper member (8) being associated to said male die (7) and configured to define a fourth portion of the mould being apt to be used for moulding the preform (P), said stripper member (8) being connected to a stripper plate (4) being actuated to shift the stripper member (8) in said first direction (D1) in order to thus strip the preform (P) from the male die (7).

2. An apparatus as per claim 1, **characterised in that** said stripper plate (4) is actuated so as to shift the stripper member (8) along the male die (7) in a reciprocating motion being carried out while the base plate (6) is in said open position.

3. An apparatus as per claim 2, **characterised in that** the stripper member (8) has the shape of a sleeve being arranged around the male die (7).

4. An apparatus as per claim 3, **characterised in that** the sleeve-shaped stripper member (8) has an annular end surface (12) defining said fourth portion of the mould being apt to be used for moulding the preform (P).

5. An apparatus as per claim 4, **characterised in that** the preform (P) comprises a test-tube-shaped body with a neck and a lip, and **in that** the fourth portion of the mould being apt to be used for moulding the preform (P), which is the portion being defined by said annular end surface (12) of the stripper member (8), substantially corresponds to an annular end portion around said lip of the preform (P).

6. An apparatus as per claim 5, **characterised in that** said first portion of the mould being apt to be used for moulding the preform (P), which is the portion being defined by the injection cavity (10), corresponds to an outer surface of said test-tube-shaped body; said second portion of the mould being apt to be used for moulding the preform (P), which is the portion being defined by said neck injection moulding female die halves (9a, 9b), corresponds to an outer surface of said neck; and said third portion of the mould being apt to be used for moulding the preform (P), which is the portion being defined by the male die (7), corresponds to an inner surface both of the test-tube-shaped body and of the neck.

7. An apparatus as per claim 6, **characterised in that** the second portion of the mould being apt to be used for moulding the preform (P) includes a configuration being apt to form a thread in said outer surface of the neck.

8. An apparatus as per any of the foregoing claims, **characterised in that** said at least one injection cavity (10) is interposed between two cooling cavities (11 a, 11 b), and **in that** it comprises two of said male dies (7a, 7b) being securely attached to a male die plate (5) being adapted and actuated so as to be shifted on the base plate (6) in a second direction (D2) transversally extending across the first direction (D1), one of said stripper members (8a, 8b) being associated to each of the male dies (7a, 7b) and connected to a respective stripper plate (4a, 4b) being separately actuated, the base plate (6) and said male die plate (5) being moved in a controlled manner in combination so as to alternately bring about the insertion of the male dies (7a, 7b) into said injection cavity (10) and into one of said cooling cavities (11a, 11b), the stripper plates (4a, 4b) being moved in a controlled manner so as to have the preform (P) stripped only from that male die (7a, 7b) having been withdrawn from a cooling cavity (11a, 11b).

9. An apparatus as per any of claims 1 through 7, **characterised in that** said cavity block (2) includes a number of said injection cavities (10) and is interposed between two cooling blocks each including an equal number of cooling cavities (11 a, 11 b), and **in that** it comprises twice as many of said male dies (7a, 7b) being securely attached to a male die plate (5) being adapted and actuated so as to be shifted on the base plate (6) in a second direction (D2) transversally extending across the first direction (D1), one of said stripper members (8a, 8b) being associated to each of the male dies (7a, 7b), said stripper members being in arrays of an equal number connected to two stripper plates (4a, 4b) being separately actuated, the base plate (6) and said male die plate (5) being actuated and thus moved in combination so as to alternately bring about the insertion of the male dies (7a, 7b) into said injection cavities (10) and into the cooling cavities (11 a, 11 b) of one of said cooling blocks, the stripper plates (4a, 4b) being moved in a controlled manner so as to have the preform (P) stripped only from those male dies (7a, 7b) having been withdrawn from the cooling cavities (11 a, 11 b).
